Europäisches Patentamt

European Patent Office

Office européen des brevets

(19)

(11) Numéro de publication : **0 116 485**
**B1**

(12)

# FASCICULE DE BREVET EUROPÉEN

(45) Date de publication du fascicule du brevet :
03.12.86

(21) Numéro de dépôt : **84400021.6**

(22) Date de dépôt : **06.01.84**

(51) Int. Cl.⁴ : **F 16 K 35/10**, G 09 F 3/03

(54) **Bague d'inviolabilité pour tête de robinet thermostatique de radiateur.**

(30) Priorité : **07.01.83 FR 8300170**

(43) Date de publication de la demande :
**22.08.84 Bulletin 84/34**

(45) Mention de la délivrance du brevet :
**03.12.86 Bulletin 86/49**

(84) Etats contractants désignés :
**AT CH DE GB IT LI SE**

(56) Documents cités :
**FR-A- 2 437 558**
**FR-A- 2 494 355**
**GB-A- 2 014 680**
**US-A- 4 326 740**

(73) Titulaire : **SAUNIER DUVAL EAU CHAUDE CHAUF-
FAGE S.D.E.C.C. - Société anonyme
Les Miroirs 18 avenue d'Alsace
F-92400 Courbevoie (FR)**

(72) Inventeur : **Carouge, Jean
Rue des Carolines Millancourt en Ponthieu
F-80100 Abbeville (FR)**

(74) Mandataire : **Lhuillier, René
ARMENGAUD JEUNE CABINET LEPEUDRY 23, boulevard de Strasbourg
F-75010 Paris (FR)**

Jouve, 18, rue St-Denis, 75001 Paris, France

## Description

L'invention concerne une bague d'inviolabilité pour tête de robinet thermostatique qui présente un certain nombre de fonctions complémentaires la rendant adaptable notamment aux têtes potentiométriques à sonde à distance.

Pour éviter les démontages ou les déréglages des têtes thermostatiques montées dans certains locaux publics ou sur des installations collectives, on connaît un dispositif d'inviolabilité tel que décrit dans FR-A-2 437 558 qui consiste en une bague en deux parties en forme de C pouvant s'encliqueter de façon irréversible en coiffant complètement l'écrou de raccordement entre ladite tête et le corps de robinet. Les organes de solidarisation qui assurent l'encliquetage de ces deux parties sont constitués, à chaque extrémité d'une demi-bague, d'un élément mâle en forme de cliquet et d'un élément femelle à rampe inclinée. Enfin des parois faisant partie de la bague, masquent les organes d'encliquetage lorsqu'ils sont en prise les uns dans les autres.

Pour adapter cette bague d'inviolabilité aux têtes potentiométriques, la demanderesse a mis au point une nouvelle bague d'inviolabilité permettant d'assurer la fonction de protection des fils du potentiomètre en même temps que du capillaire du bulbe thermostatique, tout en assurant le rôle de cache pour les butées de limitation des valeurs de consigne.

Selon l'invention la partie des deux demi-bagues formant cage pour envelopper l'écrou de raccordement se prolonge par un manchon destiné à coiffer les butées de la tête thermostatique ainsi qu'une partie du volant de manœuvre, tandis que l'une des demi-bagues sous la partie formant cage porte en outre, une cheminée de protection pour les fils du potentiomètre.

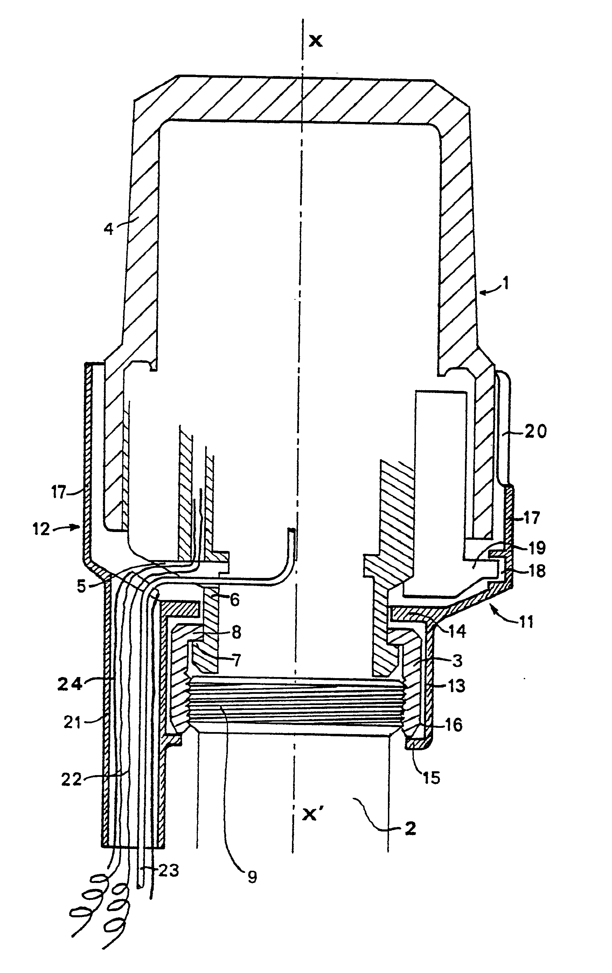

D'autres caractéristiques particulières et avantages de l'invention ressortiront de la description suivante en référence au dessin annexé qui représente une vue en coupe de la bague.

Sur cette figure apparaît le montage d'une tête thermostatique 1 d'un robinet de radiateur de chauffage central sur le corps 2 de celui-ci au moyen d'un écrou 3. La tête thermostatique 1 comporte notamment un volant ou bouton d'affichage rotatif 4, et une embase 5 solidarisée en rotation et en translation sur le corps 2 du robinet au moyen de l'écrou 3. L'embase 5 se termine à sa partie inférieure par des montants 6 portant à leur extrémité des profils d'accrochage ou épaulements extérieurs 7 sur lesquels vient prendre appui une collerette 8 prévue à la partie supérieure de l'écrou 3. L'extrémité supérieure filetée 9 du corps 2 reçoit par vissage l'écrou 3.

Cet écrou 3 est coiffé par une bague d'inviolabilité 10 constituée de deux demi-bagues 11 et 12 moulées en matière plastique s'étendant chacune approximativement sur une demi-circonférence de part et d'autre de l'axe vertical XX' et se rejoignant dans un plan axial. Chaque demi-bague est constituée d'une paroi latérale 13, d'un rebord annulaire supérieur 14 et d'un rebord annulaire inférieur 15. Cette paroi et ces rebords définissent une cage 16 qui enveloppe l'écrou 3. Chaque demi-bague se prolonge par un manchon 17 qui coiffe les butées représentées, solidaires de l'embase 5, ainsi qu'une partie du volant rotatif 4.

La demi-bague 11 représentée à droite de la figure porte un logement 18 pour la butée fixe 19, grâce à laquelle la bague 10 est bloquée en rotation par rapport à l'embase fixe 5 de laquelle déborde la butée 19. Dans l'axe de ce logement, rappelé par un repère extérieur est prévue une lumière 20 permettant de lire un des repères portés par le volant de manœuvre.

La demi-bague 12 représentée à gauche de la figure montre une cheminée 21 formant protection qui prolonge vers le bas le manchon 17 parallèlement à l'axe XX' et qui sert de logement à une gaine 24 renfermant le fil 22 venant du potentiomètre non représenté et le capillaire 23 du bulbe également non représenté. La gaine 24 est maintenue dans cette cheminée verticale dont l'orifice débouche au niveau de l'embase fixe 5. La cheminée interdit de par l'impossibilité de désemboîter la gaine, l'accessibilité aux fils et au capillaire.

Les deux demi-bagues 11 et 12 sont assemblées par un système d'encliquetage irréversible connu et non représenté. Ainsi se trouve caché et inaccessible l'écrou 3, l'embase 5, la butée fixe et les butées mobiles permettant de limiter la plage de réglage de même que la partie pleine du volant de manœuvre 4.

Hormis les avantages précédemment évoqués au sujet du fil et du capillaire, la bague évite tout risque de modification de l'étalonnage des têtes pouvant réagir sur la facturation et sur la répartition des charges de chauffage.

## Revendications

1. Bague d'inviolabilité pour tête (1) de robinet thermostatique (2) de radiateur du type comprenant une bague en deux parties (11, 12) adaptée pour coiffer complètement l'écrou (3) de raccordement de la tête (1) sur le robinet (2), les deux parties de la bague étant rendues solidaires l'une de l'autre par un encliquetage irréversible dont les organes mâles et femelles sont masqués lorsqu'ils sont en prise les uns dans les autres caractérisée en ce que chaque partie des deux demi-bagues (11, 12) formant une cage (16) pour l'écrou (3), se prolonge par un manchon (17) qui coiffe les butées solidaires de l'embase (5) ainsi qu'une partie du volant rotatif de réglage (4) et en ce qu'une bague (12) porte du côté opposé une cheminée de protection (21) parallèle à l'axe de la tête thermostatique servant de logement à la gaine (24) enrobant les fils (22) du potentiomètre ainsi que le capillaire (23) du bulbe.

2. Bague d'inviolabilité selon la revendication 1 caractérisée en ce que la demi-bague (11) porte au niveau du manchon (17) un logement (18) pour le blocage d'une butée fixe (19) qui débouche de l'embase (5).

3. Bague d'inviolabilité selon la revendication 2 caractérisée en ce qu'une lumière (20) est prévue sur la demi-bague (11) pour laisser apparaître un des repères porté par le volant rotatif 4.

4. Bague d'inviolabilité selon les revendications 2 et 3 caractérisée en ce que la lumière (20) est dans l'axe du logement (18).

5. Bague d'inviolabilité selon la revendication 1 caractérisée en ce que la cheminée de protection (21) s'ouvre à l'intérieur du manchon (17) au niveau de l'embase fixe (5).

## Claims

1. Tamper-proof ring for the head (1) of a thermostatic radiator valve (2) of the type comprising a ring in two parts (11, 12) adapted to completely cover the nut (3) connecting the head (1) to the valve (2), the two parts of the ring being rendered integral with each other by an irreversible ratchet mechanism whereof the male and female members are covered when they are in engagement with each other, characterised in that each part of the two half-rings (11, 12) forming a cage (16) for the nut (3), is extended by a sleeve (17) which covers the stops integral with the base (5) as well as part of the rotary adjusting knob (4) and in that a ring (12) comprises on the opposite side a protection sleeve (21) parallel to the axis of the thermostatic head serving as a housing for the sheath (24) surrounding the wires (22) of the potentiometer as well as the capillary tube (23) of the bulb.

2. Tamper-proof ring according to Claim 1, characterised in that at the level of the sleeve (17), the half-ring (11) comprises a housing (18) for locking a fixed stop (19) which emerges from the base (5).

3. Tamper-proof ring according to Claim 2, characterised in that a window (20) is provided on the half-ring (11) in order to allow one of the references carried by the rotary knob (4) to appear.

4. Tamper-proof ring according to Claims 2 and 3, characterised in that the window (20) is on the axis of the housing (18).

5. Tamper-proof ring according to Claim 1, characterised in that the protection sleeve (21) opens out inside the sleeve (17) at the level of the fixed base (5).

## Patentansprüche

1. Sicherungsring für den Kopf (1) eines thermostatischen Heizkörperventils (2) mit einem aus zwei Teilen (11, 12) aufgebauten, die Verbindungsmutter (3) des Kopfes (1) auf dem Ventil (2) vollständig überdeckenden Ring, wobei die beiden Teile des Ringes miteinander durch eine irreversible Sperreinrichtung verbunden sind, deren Eingriffsglieder verdeckt sind, wenn sie sich in Eingriffstellung befinden, dadurch gekennzeichnet, daß jeder Teil der eine Kammer (16) für die Mutter (3) bildenden zwei Halbringe (11, 12) sich in einer Muffe (17) fortsetzt, welche die mit dem Fußteil (5) verbundenen Anschläge sowie einen Teil des Drehregelgriffes (4) bedeckt, und daß ein Ring (12) auf der gegenüberliegenden Seite einen Schutzschacht (21) parallel zur Achse des Thermostatkopfes aufweist, welcher zur Unterbringung der die Leitungsdrähte (22) des Potentiometers sowie der Kapillarleitung (23) der Thermostatkugel dienenden Hülle (24) dient.

2. Ring nach Anspruch 1, dadurch gekennzeichnet, daß der Halbring (11) in Höhe der Muffe (17) eine Aufnahme (18) für die Blockierung eines festen Anschlages (19) aufweist, welcher vom Fußteil (5) ausgeht.

3. Ring nach Anspruch 2, dadurch gekennzeichnet, daß auf dem Halbring (11) ein Schlitz (20) vorgesehen ist, um Markierungen auf dem Drehgriff (4) sichtbar zu machen.

4. Ring nach einem der Ansprüche 2 und 3, dadurch gekennzeichnet, daß der Schlitz (20) sich in der Achse der Aufnahme (18) erstreckt.

5. Ring nach Anspruch 1, dadurch gekennzeichnet, daß der Schutzschacht (21) sich im Inneren der Hülle (17) auf der Höhe des festen Fußteiles (15) öffnet.